# EUROPÄISCHE PATENTANMELDUNG

(11) **EP 4 115 726 A1**
(43) Veröffentlichungstag der Anmeldung: **11.01.2023**
(21) Anmeldenummer: 21183749.7
(22) Anmeldetag: 05.07.2021
(51) Int. Cl.: A01G 9/24

(54) **VORRICHTUNG ZUM PFLANZENBAU**

(71) Anmelder: Kelle, Martin, 15813 Blankenfelde-Mahlow (DE)
(72) Erfinder: Kelle, Martin, 15813 Blankenfelde-Mahlow (DE)
(74) Vertreter: Bittner, Thomas L.

(57) **Zusammenfassung**

Die Erfindung betrifft eine Vorrichtung (1) zum Pflanzenbau mit einer Regalanordnung (2), bei der in einem Regalsystem (5) mit einer Regalstützstruktur (6) Pflanzträger (7) angeordnet sind, die eingerichtet sind, Pflanzen (8) für den Pflanzenbau aufzunehmen; und einer Klimakammer (3), bei der Außenwandelemente (10) und Dachelemente (11), die einen Kammerinnenraum (4) von einer äußeren Umgebung der Klimakammer (3) abgrenzen, an einer Kammerstützstruktur (9) aufgenommen sind und die Regalanordnung in dem Kammerinnenraum (4) angeordnet ist. Die Kammerstützstruktur (9) ist zumindest teilweise von der Regalstützstruktur (6) gebildet.

## Beschreibung

Die Erfindung betrifft eine Vorrichtung zum Pflanzenbau.

### Hintergrund

Pflanzenbau dient dem Anbau von Pflanzen, sei es in Form von Freilandkulturen oder in Innenräumen, zum Beispiel Gewächshäusern. Um das Wachstum der Pflanzen zu beeinflussen und zu fördern, ist regelmäßig vorgesehen, ein oder mehrere Wachstumsbedingungen für das Pflanzenwachstum einzustellen und zu regeln. Im Fall des Freilandanbaus betrifft dieses beispielsweise die Bewässerung sowie die Nährstoffversorgung, aber auch das Ausbringen von Pflanzenschutzmitteln. Erfolgt der Pflanzenbau im Gewächshaus, können weitere Wachstumsbedingungen wie beispielsweise Beleuchtung und Temperierung gezielt geregelt werden.

### Zusammenfassung

Aufgabe der Erfindung ist es, eine Vorrichtung zum Pflanzenbau anzugeben, die effizient und kostengünstig ausführbar ist und bei unterschiedlichen Umgebungsbedingungen eine gezielte Förderung des Pflanzenwachstums ermöglicht.

Zur Lösung ist eine Vorrichtung zum Pflanzenbau nach dem unabhängigen Anspruch 1 geschaffen. Ausgestaltungen sind Gegenstand von abhängigen Unteransprüchen.

Nach einem Aspekt ist eine Vorrichtung zum Pflanzenbau geschaffen, die Folgendes aufweist: eine Regalanordnung, bei der in einem Regalsystem mit einer Regalstützstruktur Pflanzträger angeordnet sind, die eingerichtet sind, Pflanzen für den Pflanzenbau aufzunehmen; und eine Klimakammer, bei der Außenwandelemente und Dachelemente, die einen Kammerinnenraum von einer äußeren Umgebung der Klimakammer abgrenzen, an einer Kammerstützstruktur aufgenommen sind und die Regalanordnung in dem Kammerinnenraum angeordnet ist. Die Kammerstützstruktur ist zumindest teilweise von der Regalstützstruktur gebildet.

Bei der Vorrichtung zum Pflanzenbau übernimmt die Regalstützstruktur zumindest teilweise gleichzeitig die Aufgabe der Kammerstützstruktur, sodass zusätzliche Stützstrukturelemente für den Aufbau der Klimakammer eingespart sind. Die Stützstrukturelemente, welche sowohl Bestandteil der Regalstützstruktur wie auch der Kammerstützstruktur sind, sind somit multifunktionell, derart, dass sie sowohl dem Aufbau und der Struktur des Regalsystems wie auch dem Aufbau und der Struktur der Klimakammer dienen. Die Regalanordnung, bei der in dem Regalsystem Pflanzenträger mit den Pflanzen aufgenommen sind, ist im von der äußeren Umgebung abgegrenzten Kammerinnenraum der Klimakammer aufgenommen. Die Außenwandelemente und die Dachelemente der Klimakammer isolieren den Kammerinnenraum gegenüber der äußeren Umgebung thermisch und ermöglichen so die Bereitstellung gezielt geregelter Wachstumsbedingungen für die Pflanzen im Kammerinnenraum der Klimakammer. Da die Kammerstützstruktur, an welcher die Außenwandelemente und die Dachelemente der Klimakammer angeordnet sind, teilweise von der Regalstützstruktur gebildet ist, kann die Vorrichtung material- und kostensparend hergestellt werden. In einer Ausgestaltung kann vorgesehen sein, dass die Kammerstützstruktur im Wesentlichen vollständig von der Regalstützstruktur gebildet ist.

Die Pflanzenträger dienen der Aufnahme der Pflanzen für den Pflanzenbau und sind beispielsweise mit Pflanzwannen gebildet, in denen die Pflanzen aufgenommen werden.

Die Regalstützstruktur kann vertikale Regalstützelemente aufweisen, und zumindest ein Teil der vertikalen Regalstützelemente kann jeweils ein vertikales Kammerstützelement der Kammerstützstruktur bilden. Beispielsweise können Außenwand- und / oder Dachelemente der Klimakammer direkt an vertikalen Regalstützelementen der Regalstützstruktur montiert sein.

Die Regalstützstruktur kann horizontale Regalstützelemente aufweisen, und zumindest ein Teil der vertikalen Regalstützelemente kann jeweils ein horizontales Kammerstützelement der Kammerstützstruktur bilden. Hierbei kann vorgesehen sein, dass Außenwand- und / oder Dachelemente der Klimakammer direkt an einem oder mehreren horizontalen Regalstützelementen der Regalstützstruktur aufliegen oder montiert sind.

Die Außenwandelemente und / oder die Dachelemente können zumindest teilweise als thermisch isolierende Plattenelemente ausgebildet sein. Die thermisch isolierenden Plattenelemente können zum Beispiel in der Sandwich-Bauweise ausgeführt sein. Die thermisch isolierenden Plattenelemente können eingerichtet sein, Element zur Gewinnung regenerativer Energien aufzunehmen.

Die Klimakammer kann eine Bodenstandfläche von wenigstens etwa 500 m² erfassen.

Der Kammerinnenraum kann als abgedunkelter Pflanzenbauraum frei von Tageslichteinfall ausgebildet sein. In einer Ausgestaltung kann vorgesehen sein, dass im Bereich der Außenwand- und / oder Dachelemente Fensterabschnitte oder -bereiche vorgesehen sind, die verdunkelbar sind, ansonsten aber wahlweise einen Tageslichteinfall zulassend ausgeführt sind.

Zumindest ein Teil der Pflanzträger kann an Regal-Hängestrukturelementen des Regalsystems aufgenommen sein, die an der Regalstützstruktur aufgehangen sind. Die Regal-Hängestrukturelemente können an horizontalen und / oder vertikalen Regalstützelementen aufgehangen sein, die gleichzeitig horizontale / vertikale Kammerstützelemente bilden.

Zumindest ein Teil der Außenwandelemente und / oder der Dachelemente kann außenseitig ein oder mehrere Solarpanel zur Energiewandlung aufweisen. Mittels Solarpanel kann Sonnenlichtenergie in elektrisch nutzbare Energie umgewandelt werden, die dann für Funktionselemente in der Klimakammer nutzbar ist, beispielsweise für eine Beleuchtungseinrichtung, die der Beleuchtung der Pflanzen dient, und / oder eine Temperierungseinrichtung, mit der eine Umgebungstemperatur für die Pflanzen in der Klimakammer einstellbar ist. Alternativ oder ergänzend kann zumindest ein Teil der Außenwandelemente und / oder der Dachelemente ein anderes System zur Energiesammlung aus regenarativen Energiequellen aufweisen.

Es kann eine Regelungseinrichtung vorgesehen sein, die eingerichtet ist, im Kammerinnenraum für die Pflanzen in den Pflanzenträgern mindestens eine Wachstumsbedingung aus der folgenden Gruppe zu regeln: Temperatur, Licht, Luftfeuchte, Nährstoffversorgung, Belüftung und CO₂-Begasung. Die Regelungseinrichtung kann eingerichtet sein, die mehreren Wachstumsbedingungen jeweils individuell einzustellen und zu regeln. Hierbei wird die Temperatur mittels einer Temperierungseinrichtung eingestellt. Die Belichtung der Pflanzen in den Pflanzenträgern erfolgt mit Hilfe einer Beleuchtungseinrichtung, welche Leuchtmittel aufweist, die zum Beispiel LED-Lampen umfassen. Die Nährstoffversorgung erfolgt mit Hilfe einer Nährstoffversorgungseinrichtung, die eine individuell angepasste Nährstofflösung bereitstellt. Zur Belüftung ist eine Belüftungseinrichtung vorgesehen. Alternativ oder ergänzend werden die Pflanzen mittels einer Begasungseinrichtung mit CO₂ begast. Die Regelungseinrichtung steht mit der jeweiligen Einrichtung in Verbindung, um diese zum Erzeugen gewünschter Wachstumsbedingungen zu regeln.

Das Regalsystem kann mit Regalsektionen gebildet sein, bei denen benachbarte Regalsektionen mittels einer Sektionstrennung voneinander getrennt sind. Die Sektionstrennung kann zum Beispiel mittels einer Trennwand gebildet sein. Es können sich horizontal oder vertikal erstreckende Sektionstrennungen ausgebildet sein. Mittels der horizontalen Sektionstrennung werden übereinander ausgebildete Regalsektion voneinander separiert. Mittels der vertikalen Sektionstrennung werden in horizontaler Richtung nebeneinander angeordnete Regalsektionen voneinander getrennt. In den Regalsektionen sind jeweils ein oder mehrere Pflanzenträger in dem Regalsystem angeordnet. Die Sektionstrennung kann für die Regalsektionen ein- oder mehrseitig bis hin zu allseitig ausgebildet sein. Mittels einer allseitigen Sektionstrennung ist eine Art Regalbox für die zugeordnete Regalsektion ausgebildet.

Alternativ oder ergänzend können Sektionsbereiche ohne eine (physische) Sektionstrennung separierte Wuchsbereiche ausgebildet sein, in denen unterschiedliche Wachstumsbedingungen für die jeweiligen Pflanzen im Sektionsbereich ausgebildet sind, zum Beispiel unterschiedliche Licht- und Nährstoffverhältnisse. Eine Sektionstrennung kann hier zum Beispiel dadurch ausgebildet sein, dass das Licht der Beleuchtungseinrichtung nur auf die Pflanzen in dem Sektionsbereich gerichtet wird. Ebenso kann die gewünschte Nährstofflösung nur den Pflanzen zugeführt werden, die in dem Sektionsbereich angeordnet sind.

Die vertikal verlaufenden Sektionstrennungen können zwischen Regalsektionen gebildet sein, und die vertikal verlaufenden Sektionstrennungen können einen Transport eines Pflanzenträgers aus einer Regalsektion in eine benachbarte Regalsektion in horizontaler Richtung zulassend ausgeführt sein. Um die Verlagerbarkeit des Pflanzenträgers zwischen den benachbarten Regalsektionen durch die Sektionstrennung hindurch zu ermöglichen, kann diese mit einer oder mehreren verschließbaren Öffnungen oder Durchbrüchen ausgebildet sein. Die Verlagerbarkeit der Pflanzenträger kann über mehrere in horizontaler Richtung nebeneinander angeordnete Regalsektionen ausgebildet sein. Sind in der Regalsektion mehrere Ebenen mit Pflanzenträgern in vertikaler Richtung übereinander ausgebildet, kann die horizontale Verlagerbarkeit zu einer benachbarten Regalsektion hin für alle diese Ebenen ausgebildet sein.

Vergleichbar kann für in horizontaler Richtung nebeneinander angeordnete Regalabschnitte, die nicht durch eine Sektionstrennung voneinander separiert sind, eine Verlagerbarkeit der Pflanzenträger zwischen benachbarten Regalabschnitten in horizontaler Richtung ausgebildet sein. Bei dieser oder anderen Ausführungsformen können die Pflanzenträger beispielsweise auf sich in horizontaler Richtung erstreckenden Stütz- oder Schienenelementen gelagert sein, die die Verlagerung in horizontaler Richtung zwischen den Sektionen oder den Regalabschnitten ermöglichen.

Die Transportmöglichkeit eines Pflanzenträgers aus einer Regalsektion in eine benachbarte Regalsektion in horizontaler Richtung kann unabhängig von der zumindest teilweisen Ausführung der Kammerstützstruktur mittels der Regalstützstruktur vorgesehen sein.

Die benachbarten Regalsektionen können mittels der Sektionstrennung zumindest einer der folgenden Ausgestaltungen entsprechend voneinander separiert sein: thermisch, belüftungstechnisch, lichttechnisch, nährstoffversorgungstechnisch und begasungstechnisch. Die Sektionstrennung kann hierzu beispielsweise thermisch isolierend ausgeführt sein, sodass in den benachbarten Regalsektionen unterschiedlicher Umgebungstemperaturen für die Pflanzen einstellbar sind. Alternativ oder ergänzend kann die Sektionstrennung lichtundurchlässig ausgeführt sein, sodass in den benachbarten Regalsektionen unterschiedliche Beleuchtungsbedingungen einstellbar sind. In ähnlicher Weise können die benachbarten Regalsektionen mittels der Sektionstrennung belüftungstechnisch und / oder begasungstechnisch voneinander separiert sein, sodass unterschiedliche Belüftungen und / oder Begasungen ausführbar sind, zum Beispiel mit CO₂.

Die Regelungseinrichtung kann eingerichtet sein, die mindestens eine Wachstumsbedingung für die Pflanzen in den Pflanzenträgern in getrennten Regalsektionen unabhängig voneinander zu regeln. Die Regelungseinrichtung ermöglicht es bei dieser Ausgestaltung, die eine oder die mehreren Wachstumsbedingungen für die Pflanzen in den Regalsektionen jeweils individuell einzustellen. Dies erfolgt mit Hilfe der der jeweiligen Regalsektion individuell zugeordneten Funktionselementen der Beleuchtungseinrichtung, der Temperierungseinrichtung, der Nährstoffversorgungseinrichtung, der Belüftungseinrichtung und / oder der Begasungseinrichtung. Hierbei kann zum Beispiel eine Regelung dahingehend vorgesehen sein, dass die jeweiligen Wachstumsbedingungen in einer Folge von in horizontaler Richtung nebeneinander angeordneten Regalsektionen, zwischen denen Pflanzenträger in einer Vorschubrichtung nacheinander verlagert werden, aufeinander abgestimmt geregelt werden, sodass die Pflanzen in den Pflanzenträgern aufeinanderfolgend mit jeweils gewünschten Wachstumsbedingungen für eine in der jeweiligen Regalsektion zu durchlaufenden Wachstumsphase beaufschlagt werden. Die Pflanzen in den Pflanzenträgern durchlaufen diese Wachstumsphasen, in dem die Pflanzenträger nach und nach in die nebeneinander liegenden Regalsektionen mittels horizontaler Verlagerung verbracht werden.

Ein oder mehrere Systemelemente des Regalsystems können gleichzeitig als Kühlkörper einer Kühleinrichtung für Leuchtmittel einer Beleuchtungseinrichtung ausgeführt sein, mit der die Pflanzen in oder auf den Pflanzenträgern beleuchtet werden. Das eine oder die mehreren Systemelemente sind hier multifunktionell ausgebildet, derart, dass neben der Funktion im Regalsystem, beispielsweise als Regalstützstrukturelement, die Kühlfunktion für die Leuchtmittel übernommen wird.

Es kann eine Nährstoffversorgungseinrichtung vorgesehen sein, die eingerichtet ist, die Pflanzen auf den Pflanzenträgern mit einer Nährstofflösung zu versorgen, kann mit einer den Leuchtmitteln der Beleuchtungseinrichtung zugeordneten Durchflusskühlung der Kühleinrichtung in Fließverbindung stehen, derart, dass die Nährstofflösung als Kühlflüssigkeit durch die Kühleinrichtung fließt. Die Nährstofflösung wird hier multifunktionell eingesetzt, indem sie zusätzlich zur Kühlung der Leuchtmittel verwendet wird. Die Durchflusskühlung kann in einem den Leuchtmitteln zugeordneten Durchflusskühlkörper gebildet sein.

Die Nährstoffversorgungseinrichtung der vorgenannten Art kann unabhängig von der zumindest teilweisen Ausführung der Kammerstützstruktur mittels der Regalstützstruktur vorgesehen sein. In einer Ausgestaltung ist so eine Vorrichtung zum Pflanzenbau geschaffen, die Folgendes aufweist: eine Regalanordnung, bei der in einem Regalsystem mit einer Regalstützstruktur Pflanzträger angeordnet sind, die eingerichtet sind, Pflanzen für den Pflanzenbau aufzunehmen; und eine Klimakammer, bei der Außenwandelemente und Dachelemente, die einen Kammerinnenraum von einer äußeren Umgebung der Klimakammer abgrenzen, an einer Kammerstützstruktur aufgenommen sind und die Regalanordnung in dem Kammerinnenraum angeordnet ist. Hierbei ist eine Nährstoffversorgungseinrichtung vorgesehen, die eingerichtet ist, die Pflanzen in den Pflanzenträgern mit einer Nährstofflösung zu versorgen, kann mit einer den Leuchtmitteln der Beleuchtungseinrichtung zugeordneten Durchflusskühlung der Kühleinrichtung in Fließverbindung stehen, derart, dass die Nährstofflösung als Kühlflüssigkeit durch die Kühleinrichtung fließt. Alternativ oder ergänzend können hierbei ein oder mehrere Systemelemente des Regalsystems gleichzeitig als Kühlkörper einer Kühleinrichtung für Leuchtmittel einer Beleuchtungseinrichtung ausgeführt sein, mit der die Pflanzen in den Pflanzenträgern beleuchtet werden. Im Übrigen können die vorangehend erläuterten Ausgestaltungen für die Vorrichtung zum Pflanzenbau einzeln oder in beliebiger Kombination bei diesen Ausgestaltungen entsprechend vorgesehen sein.

In einer Ausgestaltung ist vorgesehen, mittels einer Kondensierungseinrichtung aufgrund der Transpiration der Pflanzen abgegebenen Wasserdampf zu kondensieren und das gewonnene Kondensat für den Pflanzenbau so nutzbar zu machen, beispielsweise mittels Einspeisen des Kondensats über einen Leitungspfad in die Nährstofflösung. Diese Ausführungsform kann sowohl in Verbindung mit der Vorrichtung zum Pflanzenbau, bei der die Kammerstützstruktur zumindest teilweise mittels der Regalstützstruktur gebildet ist, als auch unabhängig hiervon vorgesehen sein. Das Kondensieren und / oder das Einspeisen des Kondensats können mittels der Regelungseinrichtung regelbar sein.

### Beschreibung von Ausführungsbeispielen

Im Folgenden werden weitere Ausführungsbeispiele unter Bezugnahme auf Figuren einer Zeichnung näher erläutert. Hierbei zeigen:
- Fig. 1: eine schematische Darstellung einer Vorrichtung zum Pflanzenbau mit einer Regalanordnung und einer Klimakammer im Querschnitt;
- Fig. 2: eine schematische Darstellung der Vorrichtung zum Pflanzenbau aus Fig. 1 im Längsschnitt;
- Fig. 3: eine perspektivische Darstellung eines Pflanzenträgers mit Wuchswanne;
- Fig. 4: eine perspektivische Darstellung mit mehreren Pflanzenträger, die an einer Wuchswanne angeordnet sind; und
- Fig. 5: eine schematische Blockdarstellung für eine Regelungseinrichtung zum Regeln von Wachstumsbedingungen für Pflanzen im Pflanzenbau.

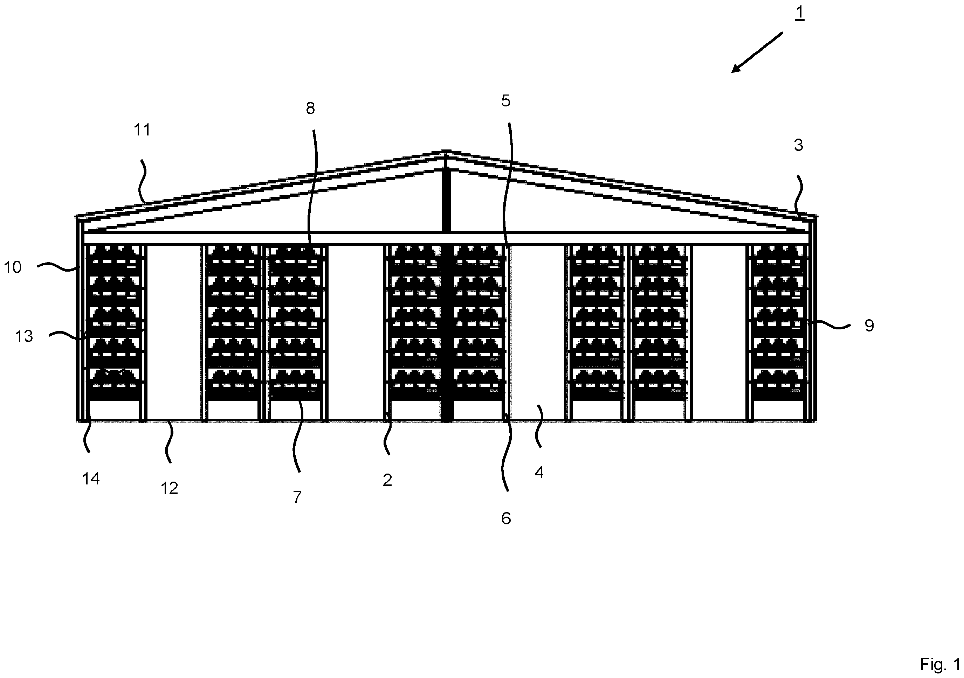

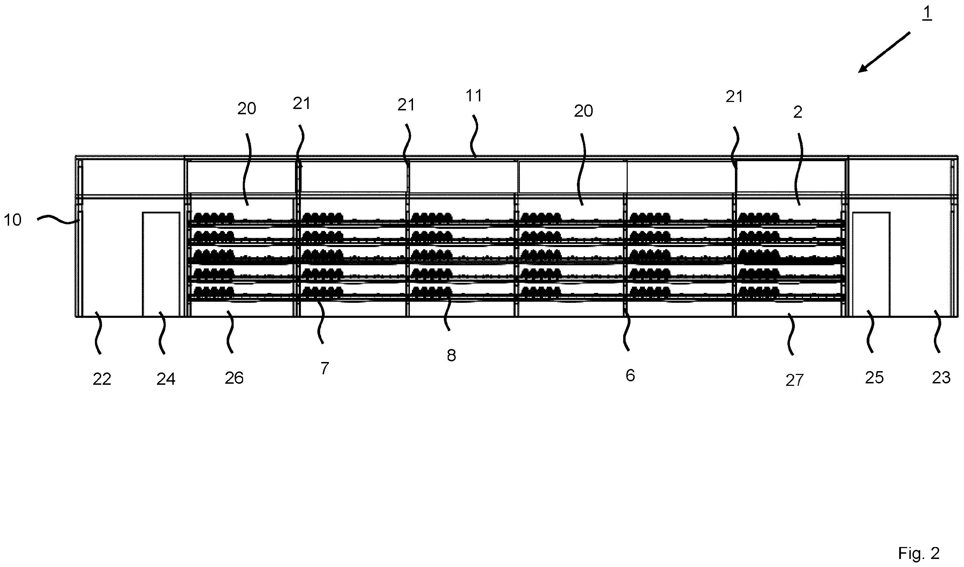

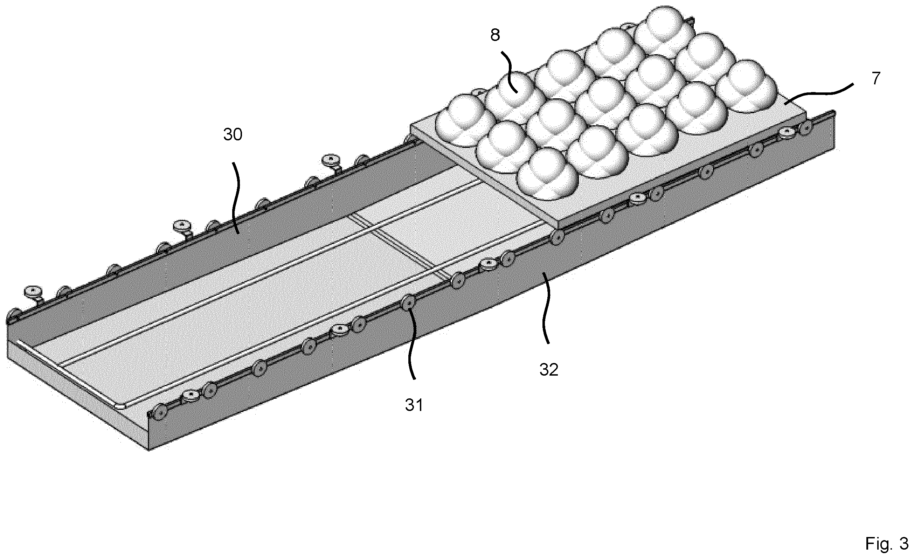

Fig. 1 und 2 zeigen schematische Darstellungen einer Vorrichtung 1 zum Pflanzenbau mit einer Regalanordnung 2 im Quer- und im Längsschnitt, die in einer Klimakammer 3 in einem Kammerinnenraum 4 angeordnet ist. Die Regalanordnung 2 stellt ein Regalsystem 5 mit einer Regalstützstruktur 6 bereit, derart, dass in dem Regalsystem 5 Pflanzenträger 7 zum Pflanzenbau angeordnet sind, die beispielsweise mit einer jeweiligen Pflanzen- oder Wuchswanne gebildet sind (vgl. Fig. 3). Der Kammerinnenraum 4 ist klimatisiert, um so gezielt die Wachstumsbedingungen für Pflanzen 8 in den Pflanzenträgern 7 zu beeinflussen.

Bei der Klimakammer 3 sind an einer Kammerstützstruktur 9 Außenwandelemente 10 und Dachelemente 11 angeordnet, die zum Beispiel mit thermisch isolierenden Plattenelementen gebildet sind, zum Beispiel Plattenelemente in Sandwich-Bauweise. Mit Hilfe der Außenwandelemente 10 und der Dachelemente 11 ist der Kammerinnenraum 4 hier gegenüber der äußeren Umgebung abgegrenzt und thermisch isoliert.

Die Klimakammer 3 steht auf einer Bodenfläche 12, die zum Beispiel wenigstens etwa 500m² erfasst. Alternativ kann die Bodenstandfläche 12 der Klimakammer 3 wenigstens etwa 1.000m² betragen. Die Kammerstützstruktur 9, an welcher die Außenwandelemente 10 und die Dachelemente 11 angeordnet sind, ist teilweise oder vollständig von der Regalstützstruktur 6 gebildet. Horizontale und / oder vertikale Regalstützelemente 13, 14 der Regalstützstruktur 6 sind daher multifunktionell ausgebildet, derart, dass sie gleichzeitig horizontale / vertikale Kammerstützelemente der Kammerstützstruktur 9 sind. Auf diese Weise ist die Vorrichtung 1 zum Pflanzenbau material- und kostensparend herstellbar. Auch wird der zur Verfügung stehende Kammerinnenraum 4 so möglichst umfangreich für den Pflanzenbau nutzbar.

Fig. 2 zeigt eine schematische Darstellung der Vorrichtung 1 zum Pflanzenbau im Längsschnitt. In horizontaler Richtung sind im Kammerinnenraum 4 in der Regalanordnung 2 mehrere nebeneinander liegende und wahlweise benachbarte Regalsektionen 20 gebildet, die im gezeigtem Beispiel über eine jeweilige Sektionstrennung 21 voneinander separiert sind. Die Sektionstrennung 21 erlaubt hierbei eine Verlagerung der Pflanzenträger 7, sei es einzeln oder in Gruppen, zwischen benachbarten der Regalsektionen 20 in horizontaler Richtung. Hierfür sind die Pflanzenträger 7 beispielsweise auf Schienen oder Führungen gelagert, die eine Verschiebung zwischen den Regalsektionen 20 in horizontaler Richtung erlauben. Zum Übertritt der Pflanzenträger 7 zwischen den benachbarten Regalsektionen 20 durch die Sektionstrennung 22 hindurch weist dieser Öffnungen oder Durchbrüche auf, die wahlweise verschließbar sind. Die Sektionstrennung 21 kann mit Hilfe einer jeweiligen Trennwand ausgebildet sein.

In gegenüberliegenden Endbereichen 22, 23 ist eine Aufgabe- und Abnahmeeinrichtung 24, 25 angeordnet, die eingerichtet ist, Pflanzenträger 7 in Endsektionen 26, 27 der Regalsektionen 20 aufzugeben oder aus diesen zu übernehmen.

Im Verlauf der horizontalen Verlagerung zwischen den Regalsektionen 20 können die Pflanzen 8 in den Pflanzenträgern 7 in den jeweiligen Regalsektionen 20 unterschiedlichen Wachstumsbedingungen ausgesetzt werden. Hierbei kann vorgesehen sein, dass die für die Pflanzen 8 in den nebeneinander liegenden Regalsektionen 20 eingestellten Wachstumsbedingungen aufeinanderfolgende Wachstumsphasen entsprechend eingestellt sind, sodass die Pflanzenträger 7 mit den Pflanzen 8 in horizontaler Richtung zwischen den Regalsektionen 20 nacheinander verlagert werden, um die verschiedenen Wachstumsphasen zu durchlaufen.

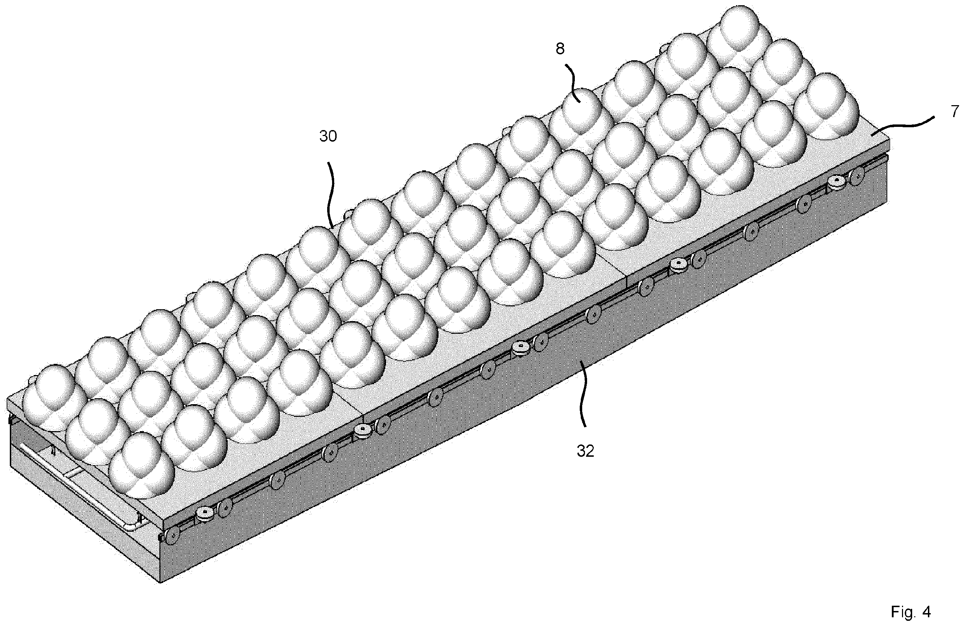

Fig. 3 zeigt eine schematische perspektivische Darstellung eines Pflanzenträgers 7 mit einer Wuchswanne 30 mit Pflanzen 8. Die Wuchswanne 30 weist an einer Wannenwand 31 Rollen 32 auf, so dass die Wuchswanne 30 in horizontaler Richtung verlagerbar ist. Alternativ oder ergänzend zu den Rollen 32 können Gleitelement vorgesehen sein. Die Wuchswanne 30 wird an einem der horizontalen Regalstützelementen 13 angeordnet. Fig. 4 zeigt eine schematische perspektivische Darstellung mehrerer Pflanzenträger 7 mit Pflanzen 8, die an einer Wuchswanne 30 angeordnet sind.

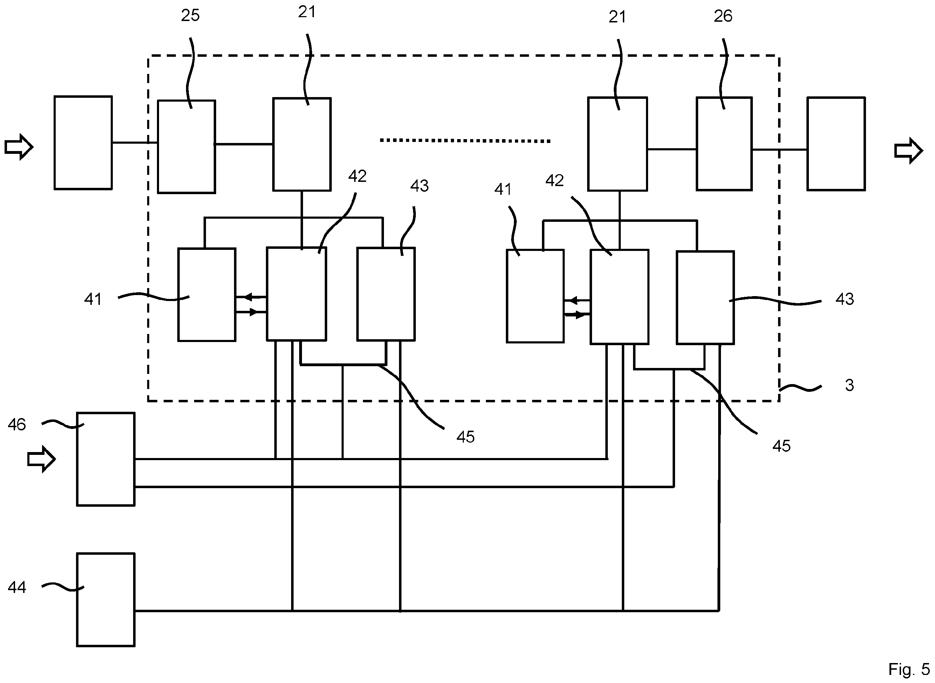

Fig. 5 zeigt eine schematische Blockdarstellung für eine Regelungseinrichtung 40, die eingerichtet ist, Wachstumsbedingungen für die Pflanzen 8 in den Pflanzenträgern 7 in der Klimakammer 3 zu regeln, insbesondere Sektionsweise, derart, dass die Wachstumsbedingungen für die Regalsektionen 21 individuell einstellbar und regelbar sind. Die Pflanzen 8 können hierbei zum vorzüchten zunächst in einen Aufzugschrank 41 vorgezüchtet werden, der außerhalb der Klimakammer 3 oder alternativ innerhalb der Klimakammer 3 in einem separierten Bereich angeordnet sein kann. Die Pflanzenträger 7 mit den (vorgezüchteten) Pflanzen 8 werden dann über das Aufgabe- und Abgabesystem 24, 25 in die Regalsektionen 20 übergeben. Den Regalsektionen 20 sind jeweils eine Beleuchtungseinrichtung 41, eine Nährstoffversorgungseinrichtung 42 sowie eine Klimatisierungseinrichtung 43 sektionsweise zugeordnet, sodass die Wachstumsbedingungen für die jeweilige Regalsektion 20 individuell einstellbar sind. Die Klimatisierungseinrichtung 43 ist hierbei mit einer Temperierungseinrichtung 44 und einer Belüftungseinrichtung gebildet oder verbunden, umso Temperatur und Belüftung sektionsweise einzustellen. In einer Ausgestaltung ist ergänzend eine Kondensierungseinrichtung vorgesehen, die eingerichtet ist, Transpiration der Pflanzen zu kondensieren und das gewonnene Kondensat für den Pflanzenbau so nutzbar zu machen, beispielsweise mittels Einspeisen des Kondensats über einen Pfad 45 in die Nährstofflösung, welche von einer Aufbereitungseinrichtung 46 für die Nährstofflösung bereitgestellt wird.

Auch kann ergänzend eine Begasungseinrichtung zur individuellen CO₂-Begasung in den Regalsektionen 21 vorgesehen sein.

Die Temperatursteuerung für die Klimatisierungseinrichtung 43 erfolgt mit Hilfe einer Kühl-Heiz-Einrichtung 45.

Haben die Pflanzenträger 7 mit den Pflanzen 8 die Regalsektionen 20 mit den jeweils hierin eingestellten Wachstumsbedingungen zum durchlaufen der unterschiedlichen Wachstumsphasen durchlaufen, werden sie mit Hilfe der Abgabe- und Aufnahmeeinrichtung 24 entnommen und wahlweise einer Weiterverarbeitungsvorrichtung 46 zugeführt, in der beispielsweise die Pflanzen 8 geerntet werden.

Die Verlagerung der Pflanzenträger 7 in horizontaler Richtung zwischen den Regalsektionen 20 kann mit Hilfe eines Fördersystems ausgeführt werden, welches zum Beispiel eingerichtet ist, die Pflanzenträger 7 entlang einer Führungs- oder Stützstruktur aktiv angetrieben zu verlagern. Alternativ oder ergänzend kann vorgesehen sein, dass die Pflanzenträger 7 entlang der Führungs- oder Stützstruktur manuell verlagerbar sind.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

## Patentansprüche

1. Vorrichtung (1) zum Pflanzenbau, mit:
- einer Regalanordnung (2), bei der in einem Regalsystem (5) mit einer Regalstützstruktur (6) Pflanzträger (7) angeordnet sind, die eingerichtet sind, Pflanzen (8) für den Pflanzenbau aufzunehmen; und
- einer Klimakammer (3), bei der Außenwandelemente (10) und Dachelemente (11), die einen Kammerinnenraum (4) von einer äußeren Umgebung der Klimakammer (3) abgrenzen, an einer Kammerstützstruktur (9) aufgenommen sind und die Regalanordnung in dem Kammerinnenraum (4) angeordnet ist;
wobei die Kammerstützstruktur (9) zumindest teilweise von der Regalstützstruktur (6) gebildet ist.

2. Vorrichtung (1) nach Anspruch 1, **dadurch gekennzeichnet, dass** die Regalstützstruktur (6) vertikale Regalstützelemente (14) aufweist und zumindest eine Teil der vertikalen Regalstützelemente jeweils ein vertikales Kammerstützelement der Kammerstützstruktur (9) bildet.

3. Vorrichtung (1) nach Anspruch 1 oder 2, **dadurch gekennzeichnet, dass** die Regalstützstruktur (6) horizontale Regalstützelemente (13) aufweist und zumindest eine Teil der vertikalen Regalstützelemente jeweils ein horizontales Kammerstützelement der Kammerstützstruktur (9) bildet.

4. Vorrichtung (1) nach mindestens einem der vorangehenden Ansprüche, **dadurch gekennzeichnet, dass** die Außenwandelemente (10) und / oder die Dachelemente (11) zumindest teilweise als thermisch isolierende Plattenelemente ausgebildet sind.

5. Vorrichtung (1) nach mindestens einem der vorangehenden Ansprüche, **dadurch gekennzeichnet, dass** die Klimakammer (3) eine Bodenstandfläche (12) von wenigstens etwa 500 m² erfasst.

6. Vorrichtung (1) nach mindestens einem der vorangehenden Ansprüche, **dadurch gekennzeichnet, dass** der Kammerinnenraum (4) als abgedunkelter Pflanzenbauraum frei von Tageslichteinfall ausgebildet ist.

7. Vorrichtung (1) nach mindestens einem der vorangehenden Ansprüche, **dadurch gekennzeichnet, dass** zumindest ein Teil der Pflanzträger (7) an Regal-Hängestrukturelementen des Regalsystems (5) aufgenommen sind, die an der Regalstützstruktur (6) aufgehangen sind.

8. Vorrichtung (1) nach mindestens einem der vorangehenden Ansprüche, **dadurch gekennzeichnet, dass** zumindest ein Teil der Außenwandelemente (10) und / oder der Dachelemente (11) außenseitig ein oder mehrere Solarpanel zur Energiewandlung aufweist.

9. Vorrichtung (1) nach mindestens einem der vorangehenden Ansprüche, **dadurch gekennzeichnet, dass** eine Regelungseinrichtung vorgesehen ist, die eingerichtet ist, im Kammerinnenraum (4) für die Pflanzen (8) auf den Pflanzenträgern (7) mindestens eine Wachstumsbedingung aus der folgenden Gruppe zu regeln: Temperatur, Licht, Luftfeuchte, Nährstoffversorgung, Belüftung und CO₂-Begasung.

10. Vorrichtung (1) nach mindestens einem der vorangehenden Ansprüche, **dadurch gekennzeichnet, dass** das Regalsystem mit Regalsektionen (20) gebildet ist, bei denen benachbarte Regalsektionen mittels einer Sektionstrennung (21) voneinander getrennt sind.

11. Vorrichtung (1) nach Anspruch 10, **dadurch gekennzeichnet, dass** vertikal verlaufende Sektionstrennungen zwischen Regalsektionen (20) gebildet sind und die vertikal verlaufenden Sektionstrennungen einen Transport eines Pflanzenträgers (7) aus einer Regalsektion in eine benachbarte Regalsektion in horizontaler Richtung zulassend ausgeführt sind.

12. Vorrichtung (1) nach Anspruch 10 oder 11, **dadurch gekennzeichnet, dass** die benachbarten Regalsektionen mittels der Sektionstrennung (21) zumindest einer der folgenden Ausgestaltungen entsprechend voneinander separiert sind: thermisch, belüftungstechnisch, lichttechnisch, nährstoffversorgungstechnisch und begasungstechnisch.

13. Vorrichtung (1) nach einem der Ansprüche 10 bis 12, soweit auf Anspruch 9 rückbezogen, **dadurch gekennzeichnet, dass** die Regelungseinrichtung eingerichtet ist, die mindestens eine Wachstumsbedingung für die Pflanzen (8) auf den Pflanzenträgern (7) in getrennten Regalsektionen (20) unabhängig voneinander zu regeln.

14. Vorrichtung (1) nach mindestens einem der vorangehenden Ansprüche, **dadurch gekennzeichnet, dass** ein oder mehrere Systemelemente des Regalsystems gleichzeitig als Kühlkörper einer Kühleinrichtung für Leuchtmittel einer Beleuchtungseinrichtung ausgeführt sind, mit der die Pflanzen (8) auf den Pflanzenträgern (7) beleuchtet werden.

15. Vorrichtung (1) nach mindestens einem der vorangehenden Ansprüche, **dadurch gekennzeichnet, dass** eine Nährstoffversorgungseinrichtung (45) vorgesehen ist, die eingerichtet ist, die Pflanzen in den Pflanzenträgern (7) mit einer Nährstofflösung zu versorgen, mit einer den Leuchtmitteln der Beleuchtungseinrichtung zugeordneten Durchflusskühlung der Kühleinrichtung in Fließverbindung steht, derart, dass die Nährstofflösung als Kühlflüssigkeit durch die Kühleinrichtung fließt.
